# EUROPÄISCHE PATENTANMELDUNG

(11) **EP 2 894 085 A1**
(43) Veröffentlichungstag der Anmeldung: **15.07.2015**
(21) Anmeldenummer: 15151847.9
(22) Anmeldetag: 22.07.2010
(51) Int. Cl.: B62D 59/04, B60S 9/215, B60L 11/18

(54) **Rangierantrieb für einen Anhänger, insbesondere einen Wohnwagen**

(62) Teilanmeldung aus: 10007633.0
(71) Anmelder: Truma Gerätetechnik GmbH & Co. KG, 85640 Putzbrunn (DE)
(72) Erfinder: Schaurer, Oliver, 85445 Oberding (DE); Frank, Andreas, 83071 Stephanskirchen (DE)
(74) Vertreter: Prinz & Partner mbB

(57) **Zusammenfassung**

Die Erfindung betrifft einen Rangierantrieb (5) für einen Anhänger (1), mit
- einer Antriebsvorrichtung (6, 6') mit einem Antriebsmotor und einer mit dem Antriebsmotor gekoppelten Übertragungsvorrichtung (7, 7') zum Übertragen eines Drehmoments des Antriebsmotors auf ein Rad (4, 4') des Anhängers (1);
- einer Befestigungsvorrichtung (8) zum Befestigen der Antriebsvorrichtung (6, 6') am Anhänger (1); und
- einem elektrischen Energiespeicher (9) zum Versorgen des Antriebsmotors mit elektrischer Energie; wobei
- der elektrische Energiespeicher (9) außen an dem Anhänger (1) anordenbar und mit der Antriebsvorrichtung (6, 6') koppelbar ist;
- wobei der elektrische Energiespeicher (9) an oder innerhalb der Antriebsvorrichtung (6, 6') angeordnet ist.

## Beschreibung

Die Erfindung betrifft gemäß Patentanspruch 1 einen Rangierantrieb für einen Anhänger, insbesondere einen Wohnwagen.

Anhänger werden üblicherweise von Zugfahrzeugen gezogen. Beispielsweise ist es bekannt, dass ein Personenkraftwagen einen Wohnwagen zieht. Wenn der Anhänger vom Zugfahrzeug abgenommen ist, wird er üblicherweise von Hand in die endgültige Standposition geschoben. Allerdings werden heutzutage zunehmend Anhänger im Wohnwagenbereich angeboten, die aufgrund ihrer Größe und ihres Gewichts nur noch unter großer Mühe von Hand verschoben werden können.

Daher wurden Hilfsantriebe entwickelt, die es ermöglichen, auch ohne Zugfahrzeug einen Anhänger mit Motorunterstützung zu verschieben oder zu drehen. Derartige Rangierantriebe können auch nach einer Herstellung des Anhängers nachgerüstet werden.

Typischerweise werden die Komponenten eines solchen Rangierantriebs aus einer 12-Volt-Batterie gespeist, um ihn unabhängig von einem externen Stromnetz verwenden zu können. Beispielsweise ist es bekannt, das Rangiersystem an eine im Anhänger im Allgemeinen bereits vorhandene 12-Volt-Batterie anzuschließen. Die benötigte Energie kann über geeignete Kabel von der 12-Volt-Batterie zu den Komponenten des Rangierantriebs übertragen werden.

Allerdings werden wegen der geringen Nennspannung der 12-Volt-Batterie und der für den Rangierantrieb erforderlichen hohen Leistung Kabel mit großen Querschnitten benötigt, die meist schwer und teuer sind. Die dicken und zudem zum Anschluss an die 12-Volt-Batterie benötigten langen Kabelstränge führen zu einem hohen Leistungsverlust innerhalb des Energieversorgungssystems. Zudem ist ein Einbau des solchen Rangierantriebs mit Anschluss an die im Anhänger vorhandene Batterie zeitaufwändig und macht Bohrungen durch die Außenhaut des Anhängers nötig.

Der Erfindung liegt die Aufgabe zugrunde, einen Rangierantrieb für einen Anhänger anzugeben, der kostengünstig hergestellt, eingebaut und verwendet werden kann.

Diese Aufgabe wird durch einen Rangierantrieb für einen Anhänger nach Patentanspruch 1 gelöst. Weiterentwicklungen der Erfindung sind den abhängigen Ansprüchen zu entnehmen.

Ein Rangierantrieb für einen Anhänger weist eine Antriebsvorrichtung mit einem Antriebsmotor und einer mit dem Antriebsmotor gekoppelten Übertragungsvorrichtung zum Übertragen eines Drehmoments des Antriebsmotors auf ein Rad des Anhängers auf. Weiterhin weist der Rangierantrieb eine Befestigungsvorrichtung zum Befestigen der Antriebsvorrichtung am Anhänger auf. Zudem ist ein elektrischer Energiespeicher zum Versorgen des Antriebsmotors mit elektrischer Energie vorgesehen, der außen an dem Anhänger anordenbar und beispielsweise auch außerhalb des Anhängers mit der Antriebsvorrichtung koppelbar ist.

Der Anhänger kann ein Fahrzeug sein, das typischerweise von einem Zugfahrzeug wie einem Kraftwagen gezogen wird und daher über keinen eigenständigen Hauptantrieb verfügt. Der Rangierantrieb ermöglicht es, den Anhänger auch dann komfortabel bewegen und rangieren zu können, wenn er vom Zugfahrzeug abgenommen wurde. Der Anhänger kann beispielsweise ein Wohnwagen, ein Caravan, ein Transportanhänger, ein Lastanhänger oder ein Spezialanhänger wie beispielsweise ein Bootstrailer sein.

Der in der Antriebsvorrichtung angeordnete Antriebsmotor kann beispielsweise als Elektromotor geeigneter Bauart und Leistungsstärke ausgeführt sein. Neben dem Antriebsmotor kann die Antriebsvorrichtung weitere Komponenten wie beispielsweise eine Leistungselektronik zur Ansteuerung des Antriebsmotors oder ein Getriebe für den Antriebsmotor aufweisen.

Die mit dem Antriebsmotor gekoppelte Übertragungsvorrichtung kann darüber hinaus beispielsweise eine von dem Antriebsmotor drehend antreibbare Antriebsrolle aufweisen, die beispielsweise zwischen einer Ruheposition, in der die Antriebsrolle von dem Rad des Anhängers getrennt ist, und einer Antriebsposition, in der die Antriebsrolle gegen das Rad des Anhängers gedrückt wird, bewegt werden kann. Ein Beispiel für einen derartigen Rangierantrieb mit Antriebsrolle ist in der EP 1 836 085 A1 oder der EP 1 714 858 A1 beschrieben.

Durch die Befestigungsvorrichtung kann die Antriebsvorrichtung derart an dem Anhänger befestigt werden, dass die Antriebsvorrichtung geeignet zum Anhänger positioniert werden und beispielsweise die Antriebsrolle der Übertragungsvorrichtung in die Ruheposition bzw. in die Antriebsposition bewegt werden kann. Da die Antriebsrolle zur Übertragung des Drehmoments des Antriebsmotors fest gegen das Rad des Anhängers gepresst werden muss, kann die Befestigungsvorrichtung beispielsweise an einem Grundrahmen (Chassisrahmen) des Anhängers befestigbar und/oder an einer Fahrzeugachse des Anhängers abstützbar sein.

Als elektrischer Energiespeicher kann beispielsweise ein Akkumulator oder eine Batterie einer geeigneten Leistungsklasse wie beispielsweise eine Li-Ion-Batterie verwendet werden. Durch die Batterie können alle elektrischen Komponenten des Rangierantriebs gespeist werden, beispielsweise auch der Antriebsmotor und die Leistungselektronik zur Motorsteuerung.

Der elektrische Energiespeicher kann außen an dem Anhänger angeordnet sein. Beispielsweise kann der elektrische Energiespeicher außen an einem Aufbau des Anhängers, welcher auf einem Fahrgestell oder einem Grundrahmen des Anhängers angeordnet bzw. montiert sein kann, angeordnet sein. In diesem Fall kann der elektrische Energiespeicher beispielsweise an dem Fahrgestell oder Grundrahmen des Anhängers angeordnet und befestigt sein. Falls der Anhänger ein Wohnanhänger mit bewohnbarer Kabine ist, kann der elektrische Energiespeicher außerhalb der Kabine angeordnet sein. In diesem Fall kann der elektrische Energiespeicher derart am Grundrahmen oder am Fahrgestell befestigt sein, dass zur Befestigung ein Eingriff in die Außenhaut des Anhängers nicht notwendig ist. Bohrungen in einer Außenhaut des Anhängers können daher bei einer derartigen Anordnung vermieden werden.

Bei der Anordnung des elektrischen Energiespeichers außen am Anhänger kann dieser auch außerhalb des Anhängers mit den zu versorgenden Komponenten, beispielsweise der Antriebsvorrichtung, gekoppelt sein. Sämtliche elektrischen Kopplungen, die zur Versorgung der Komponenten oder auch zum Laden des elektrischen Energiespeichers vorgesehen sind, wie zum Beispiel Kabel und Verbinder, können daher ebenfalls außen am Anhänger angeordnet und beispielsweise am Grundrahmen oder Fahrgestell montiert bzw. befestigt und mit dem elektrischen Energiespeicher und den zu versorgenden Komponenten verbunden sein. Mit anderen Worten, kann eine Verkabelung des Rangierantriebs vollständig außerhalb der Außenhaut des Anhängers geführt werden.

Die Anordnung des elektrischen Energiespeichers außen an dem Anhänger und seine ebenfalls außerhalb des Anhängers vorgesehene Kopplung mit den zu versorgenden Komponenten des Rangierantriebs ermöglichen eine einfache und kostengünstige Montage des Rangierantriebs, die ohne Eingriff in den Anhänger und insbesondere ohne Bohrungen in die Außenhaut des Anhängers vonstatten gehen kann. Weiterhin kann bei dieser Gestaltung der elektrische Energiespeicher speziell im Hinblick auf den Energiebedarf des Rangierantriebs ausgelegt werden.

In einer weiteren Ausführungsform können die Befestigungsvorrichtung und die Antriebsvorrichtung außerhalb des Anhängers anordenbar und der elektrische Energiespeicher an oder innerhalb der Befestigungsvorrichtung und/oder der Antriebsvorrichtung angeordnet sein. Beispielsweise kann der elektrische Energiespeicher außen an der Befestigungsvorrichtung oder der Antriebsvorrichtung angeordnet und beispielsweise mit dieser fest verbunden sein. Hierfür kann zum Beispiel ein Gehäuse vorgesehen und an der Befestigungsvorrichtung bzw. der Antriebsvorrichtung befestigt sein. Weiterhin kann der elektrische Energiespeicher auch innen in der Befestigungsvorrichtung bzw. der Antriebsvorrichtung angeordnet sein, beispielsweise in einer dafür vorgesehenen Ausnehmung oder einem innerhalb der Befestigungs- und/oder Antriebsvorrichtung angeordneten Gehäuse.

Die Anordnung des elektrischen Energiespeichers an oder innerhalb der Befestigungsvorrichtung und/oder der Antriebsvorrichtung, welche ihrerseits außerhalb des Anhängers angeordnet sind, ermöglicht es, den Rangierantrieb als integriertes System wie beispielsweise als Nachrüstsystem anzubieten. Beim Einbau eines solchen integrierten Rangierantriebs muss keine zusätzliche Verkabelung zwischen dem Rangierantrieb und dem Anhänger vorgenommen werden, was die Montagezeit zusätzlich verkürzt.

Weiterhin ist bei einer derartigen Anordnung der elektrische Energiespeicher nahe bei den zu speisenden Komponenten gelegen. Eine elektrische Verbindung der Komponenten mit dem elektrischen Energiespeicher kann folglich durch kurze Kabelstücke, die je nach Anordnung des Energiespeichers im Rangiersystem z.B. nicht länger als 30 cm bis 1 m sind, erreicht werden. Hierdurch können Leistungsverluste innerhalb des Energieversorgungssystems vermieden und das Gewicht und die Kosten des Rangierantriebs gesenkt werden. Zudem können durch die integrale Anordnung des elektrischen Energiespeichers und der zu speisenden Komponenten die elektrischen Verbindungen vor Umwelteinflüssen geschützt werden, sodass der Rangierantrieb weniger störanfällig und somit robuster und kostengünstiger im Betrieb ist.

In einer Ausführungsform weist der Rangierantrieb eine weitere, durch die Befestigungsvorrichtung außerhalb des Anhängers anordenbare Antriebsvorrichtung (zweite Antriebsvorrichtung) mit einem weiteren Antriebsmotor und einer weiteren, mit dem weiteren Antriebsmotor gekoppelten Übertragungsvorrichtung zum Übertragen eines Drehmoments des weiteren Antriebsmotors auf ein weiteres Rad des Anhängers auf. Die weitere Antriebsvorrichtung kann im Wesentlichen wie die bereits beschriebene Antriebsvorrichtung gestaltet, jedoch an die Gegebenheiten des jeweiligen Einbauorts angepasst sein. Beispielsweise kann die weitere Antriebsvorrichtung an dem weiteren Rad an derselben Radachse gegenüber angeordnet sein. In diesem Fall handelt es sich um einen beidseitigen Rangierantrieb mit jeweils links- und rechtsseitiger Antriebsvorrichtung.

Da sowohl die Antriebsvorrichtung als auch die weitere Antriebsvorrichtung durch die Befestigungsvorrichtung an dem Anhänger befestigt werden können, kann die Befestigungsvorrichtung eine Verbindungstraverse zwischen den beiden Antriebsvorrichtungen aufweisen. Die Verbindungstraverse kann beispielsweise eine Verbindungs-, Mittel- oder Querstange aufweisen, die einen geeigneten Querschnitt und eine geeignete Torsionssteifigkeit haben kann. Sie kann daher beispielsweise die Übertragung der Drehmomente der Antriebsmotoren auf die Räder des Anhängers verbessern.

Weiterhin kann in dieser Ausführungsform eine Kopplungsvorrichtung innerhalb der Verbindungstraverse vorgesehen sein, die sich beispielsweise in einem Hohlraum innerhalb der Verbindungstraverse zwischen den Antriebsvorrichtungen erstrecken und diese miteinander koppeln kann. Durch die Kopplungsvorrichtung können die Antriebsvorrichtungen beispielsweise elektrisch gekoppelt und/oder mit dem elektrischen Energiespeicher verbunden sein. Zusätzlich oder alternativ kann die Kopplungsvorrichtung eine Kommunikationsverbindung zum elektronischen Austausch von Daten wie beispielsweise über ein Bussystem (Datenbus) aufweisen.

Durch die innerhalb der Verbindungstraverse angeordnete Kopplungsvorrichtung kann die elektrische bzw. elektronische Kopplung der beiden Antriebsvorrichtungen vollständig innerhalb des Rangierantriebs realisiert werden. Daher kann der Rangierantrieb als integrales System angeboten, verkauft und montiert werden. Eine Verbindung der Komponenten mit dem Anhänger, beispielsweise ein elektrischer Anschluss, ist dabei nicht notwendig. Die integral gekapselte Anordnung der elektrischen/elektronischen Verbindungen zwischen den Einzelkomponenten vereinfacht weiter die Montage und erhöht die Robustheit im Betrieb.

In einer Ausführungsform kann der elektrische Energiespeicher innerhalb der Befestigungsvorrichtung bzw. der Verbindungstraverse angeordnet und durch die Kopplungsvorrichtung mit der Antriebsvorrichtung und/oder mit der weiteren Antriebsvorrichtung elektrisch gekoppelt sein.

Bei dieser Anordnung werden nur kurze Kabelstücke mit einer Länge von beispielsweise weniger als 1,20 m zur elektrischen Kopplung des elektrischen Energiespeichers mit den Antriebsvorrichtungen benötigt, sodass das System bei der Herstellung nur geringe Herstellkosten und im Betrieb nur geringe Leistungsverluste aufweist. Weiterhin können bei einer derartigen Anordnung sämtliche elektrischen Verbindungen vom elektrischen Energiespeicher zu den zu versorgenden Komponenten innerhalb der Befestigungsvorrichtung bzw. der Verbindungstraverse angeordnet sein, so dass diese weitgehend vor Umwelteinflüssen und Beschädigungen geschützt sind. Zudem ermöglicht eine derartige Anordnung des elektrischen Energiespeichers eine günstige Gewichtsverteilung des Anhängers mit Rangierantrieb, wenn der elektrische Energiespeicher beispielsweise in der Nähe der Radachse zentriert angeordnet wird.

In einer weiteren Ausführungsform können der elektrische Energiespeicher in der Antriebsvorrichtung und ein weiterer (zweiter) elektrischer Energiespeicher in der weiteren (zweiten) Antriebsvorrichtung angeordnet sein. Weiterhin kann ein Ladestrom zu den elektrischen Energiespeichern beispielsweise durch die Kopplungsvorrichtung übertragen werden.

In dieser Ausführungsform können die elektrischen Energiespeicher nahe bei den zu speisenden Komponenten in den Antriebsvorrichtungen angeordnet sein. Sie können daher mit kurzen Kabelstücken von beispielsweise weniger als 30 cm oder auch direkt mit den zu speisenden Komponenten der Antriebsvorrichtung gekoppelt werden, wodurch eine weitgehend verlustfreie Speisung der Antriebsvorrichtungen erreicht werden kann und Kosten für die Verkabelung eingespart werden.

Eine Kopplung der elektrischen Energiespeicher beispielsweise zum gemeinsamen Anschluss an eine Ladequelle kann durch die Kopplungsvorrichtung erreicht werden. Falls die zur Ladung zuzuführende Spannung hoch sein und beispielsweise 230 V betragen kann, wird hierfür lediglich ein dünnes Ladekabel (230 V Leitung) als Kopplungsvorrichtung benötigt. Hierdurch wird beispielsweise ein Laden der elektrischen Energiespeicher durch einseitiges Anstecken eines Ladesteckers zum Zuführen von Energie aus einer externen Energiequelle auf einer beliebigen, mit einer passenden Steckverbindung versehenen Seite des Rangierantriebs ermöglicht. Dies erlaubt ein komfortables Laden der elektrischen Energiespeicher an einer externen Energiequelle, beispielsweise an einer Landstromsteckdose, unabhängig von einer Parkposition des Anhängers.

In einer weiteren Ausführungsform ist eine Steuerungsvorrichtung zum Ansteuern des Antriebsmotors und/oder des weiteren Antriebsmotors vorgesehen, wobei die Steuerungsvorrichtung in der Befestigungsvorrichtung, der Verbindungstraverse und/oder der Antriebsvorrichtung angeordnet sein und durch den elektrischen Energiespeicher mit Energie gespeist werden kann. Beispielsweise kann die Steuerungsvorrichtung benachbart zum elektrischen Energiespeicher in der Antriebsvorrichtung, der Befestigungsvorrichtung oder der Verbindungstraverse angeordnet sein und so über eine nur kurze Kabelverbindung durch den elektrischen Energiespeicher gespeist werden.

In dieser Ausführungsform können Steuerungsinformationen zwischen der Steuerungsvorrichtung, der Antriebsvorrichtung und/oder der weiteren Antriebsvorrichtung beispielsweise durch die Kopplungsvorrichtung bzw. über eine innerhalb der Kopplungsvorrichtung vorgesehene Kommunikationsverbindung (Datenbus) ausgetauscht werden. Die Steuerungsvorrichtung kann zudem durch eine Funkverbindung mit einer Fernbedienungseinheit Steuerbefehle eines Bedieners des Rangierantriebs erhalten und diese in Steuerbefehle für die Leistungselektronik zur Steuerung der Antriebsmotoren umsetzen.

Bei einer Anordnung der Steuerungsvorrichtung in der Befestigungsvorrichtung bzw. der Verbindungstraverse und bei einer Übermittlung der Steuerungsinformation von der Steuerungsvorrichtung an die Antriebsmotoren durch die ebenfalls in der Befestigungsvorrichtung bzw. in der Verbindungstraverse angeordnete Kopplungsvorrichtung kann sichergestellt werden, dass die gesamte Elektronik zur Datenübertragung (Datenbus und zugehörige Steckverbindungen) innerhalb der Befestigungsvorrichtung bzw. der Verbindungstraverse angeordnet und so vor Umwelteinflüssen und Beschädigungen geschützt sind. Hierdurch kann die Robustheit des Rangierantriebs weiter erhöht werden.

In einer Variante dieser Ausführungsform können die Steuerungsvorrichtung innerhalb der Antriebsvorrichtung und eine weitere Steuerungsvorrichtung innerhalb der weiteren Antriebsvorrichtung angeordnet sein. In dieser Ausführungsform können Steuerungsinformationen zwischen den Steuerungsvorrichtungen beispielsweise durch die Kopplungsvorrichtung sicher und geschützt übertragen werden. Alternativ oder zusätzlich ist es möglich, eine bidirektionale Funkverbindung zwischen der Steuerungsvorrichtung, der weiteren Steuerungsvorrichtung und der Fernbedienungseinheit vorzusehen.

Über die bidirektionale Funkverbindung können zum Einen Steuerungsinformationen zwischen der Fernbedienungseinheit und jeweils einer oder beiden Steuerungsvorrichtungen übertragen werden. Zum Anderen können auch Steuerungsinformationen von einer der Steuerungsvorrichtungen zur Fernbedienungseinheit und von der Fernbedienungseinheit zur weiteren Steuerungsvorrichtung übermittelbar sein. Bei einer derartigen Ausgestaltung der bidirektionalen Funkverbindung zwischen den Steuerungsvorrichtungen und der Fernbedienungseinheit kann die Kommunikationsverbindung innerhalb der Kopplungsvorrichtung entfallen, und die Kopplungsvorrichtung lediglich zur Versorgung der funktionalen Einheiten mit Energie verwendet werden. Dies ermöglicht ein weiteres Einsparen von Kabelverbindungen und damit eine kostengünstige Gestaltung des Rangierantriebs.

In einer weiteren Ausführungsform ist eine Ladevorrichtung zum Laden des elektrischen Energiespeichers vorgesehen, wobei die Ladevorrichtung mit dem elektrischen Energiespeicher und/oder mit einer beispielsweise am Anhänger vorgesehenen externen Energieeinspeisungsvorrichtung koppelbar ist. Die Ladevorrichtung kann durch ein außerhalb des Anhängers ansteckbares oder innerhalb des Anhängers angeordnetes Ladekabel mit dem elektrischen Energiespeicher und/oder mit der externen Energieeinspeisungsvorrichtung des Anhängers verbindbar sein.

Die externe Energieeinspeisungsvorrichtung kann beispielsweise einen am Anhänger vorgesehenen Zugang zu einer Landstromsteckdose oder eine Deichselsteckdose zum Einspeisen von elektrischer Energie vom Zugfahrzeug aufweisen.

In der Variante, in der das Ladekabel außerhalb des Anhängers ansteckbar ist, kann gewährleistet werden, dass alle Komponenten des Rangierantriebs außerhalb des Anhängers angeordnet bzw. montiert werden können. Dies ermöglicht eine einfache Montage bzw. Nachrüstung des Rangierantriebs. In diesem Fall kann der Benutzer des Rangierantriebs zum Laden des elektrischen Energiespeichers das Ladekabel bei Bedarf außen am Anhänger bzw. am Rangierantrieb einstecken und dadurch ein Laden des elektrischen Energiespeichers auslösen.

In der Variante, in der das Ladekabel innerhalb des Anhängers verlegt ist, kann eine automatische Ladung des elektrischen Energiespeichers beispielsweise bei Anschluss der externen Energieeinspeisungsvorrichtung an eine Landstromsteckdose oder an einer Energieversorgung des Zugfahrzeugs gewährleistet werden.

In einer weiteren Variante dieser Ausführungsform kann die Ladevorrichtung innerhalb der Antriebsvorrichtung, der Befestigungsvorrichtung und/oder der Verbindungstraverse angeordnet sein und durch das Ladekabel mit der externen Energieeinspeisungsvorrichtung verbindbar sein.

In dieser Variante kann gewährleistet werden, dass sämtliche Komponenten des Rangierantriebs außerhalb des Anhängers angeordnet und beispielsweise integriert als Nachrüstsystem angeboten werden können. Lediglich beim Laden des elektrischen Energiespeichers ist ein manueller Anschluss des Ladekabels an eine externe Energieeinspeisungsvorrichtung notwendig. Die Montage bzw. das Nachrüsten eines derartigen Systems erfordert keinerlei Eingriff in eine Struktur des Anhängers, beispielsweise keinerlei Bohrung in der Außenhaut des Anhängers, und kann daher einfach und kostengünstig realisiert werden.

In einer weiteren Variante kann die Ladevorrichtung mit der externen Energieeinspeisungsvorrichtung des Anhängers koppelbar und durch das Ladekabel mit dem elektrischen Energiespeicher verbindbar sein. Beispielsweise ist es bei dieser Variante auch möglich, eine im Anhänger vorgesehene Ladevorrichtung zum Laden des elektrischen Energiespeichers zu nutzen.

In einer weiteren Variante kann die Ladevorrichtung innerhalb des Anhängers, beispielsweise innerhalb des Aufbaus des Anhängers, z.B. an oder in der Kabine des Anhängers, angeordnet sein. Ist in dieser Variante zusätzlich das Ladekabel innerhalb des Anhängers verlegt, kann eine automatische Ladung des elektrischen Energiespeichers beispielsweise bei Anschluss der externen Energieeinspeisungsvorrichtung an eine Landstromsteckdose oder an einer Energieversorgung des Zugfahrzeugs ohne weitere manuelle Eingriffe des Benutzers gewährleistet werden.

In einer weiteren Ausführungsform ist es möglich, die Ladevorrichtung nicht ortsfest am Rangierantrieb oder am Anhänger anzuordnen, sondern als mobiles Gerät oder Zubehör separat beispielsweise zusammen mit dem Ladekabel anzubieten, und eine Steckverbindung zur Verbindung mit dem Rangierantrieb, insbesondere mit dem elektrischen Energiespeicher, beispielsweise beidseitig an den beiden Antriebsvorrichtungen vorzusehen. Auch bei dieser Ausführungsform ist zur Montage bzw. Nachrüstung des Rangierantriebs an dem Anhänger kein Eingriff in den Anhänger notwendig.

In einer weiteren Ausführungsform kann der externe Energiespeicher durch eine induktive Ladevorrichtung induktiv ladbar sein. Für diese Ausführungsform ist eine Kabelverbindung zwischen dem externen Energiespeicher und der Ladevorrichtung nicht erforderlich. Bei dieser Ausführungsform kann die Ladevorrichtung beispielsweise als separates, auch externes Zubehörteil gestaltet sein.

In einer Variante kann die Kopplungsvorrichtung durch eine innerhalb der Verbindungstraverse angeordnete Steckverbindung mit dem elektrischen Energiespeicher, der Steuerung und/oder der Ladevorrichtung koppelbar sein.

Die Steckverbindung kann beispielsweise durch einen Stecker der entsprechenden Schutzklasse im Hinblick auf die anliegende Spannung ausgeführt sein. Beispielsweise ist bei Verwendung eines elektrischen Energiespeichers mit einer höheren Nennspannung wegen der geringeren Stromstärke die Verwendung eines Standardsteckers bzw. einer Standardsteckverbindung möglich. Die Anordnung der Steckverbindung innerhalb der Verbindungstraverse, beispielsweise im Verbindungsrohr, kann die Steckverbindung vor Umwelteinflüssen und Erschütterungen im Fahrbetrieb schützen und so eine robuste Gestaltung des Rangierantriebs ermöglichen.

In weiteren Ausführungsformen können der elektrische Energiespeicher und/oder der weitere elektrische Energiespeicher eine Nennspannung von 12 Volt oder mehr aufweisen. Beispielsweise können der elektrische Energiespeicher und/oder der weitere elektrische Energiespeicher auf beliebige Nennspannungen größer oder gleich 12 Volt konfektioniert werden, z.B. auf 14,8 Volt, 18,5 Volt 22,2 Volt oder 25,9 Volt. Auch Nennspannungen von 24, 32 oder 48 Volt sind möglich.

Wegen der im Vergleich zu einer herkömmlichen 12 Volt Spannung höheren Nennspannung von beispielsweise 24, 32 oder 48 Volt werden in diesen Ausführungsformen zur Energieversorgung geringere Stromstärken benötigt als bei einer Energieversorgung über eine Batterie mit 12 Volt Nennspannung. Demzufolge können Kabel mit dünneren Querschnitten von beispielsweise 1,5 bis 2,5 mm<2> verwendet werden, wodurch Gewicht und Herstellkosten des Rangierantriebs gesenkt werden. Weiterhin treten durch die höhere Nennspannung vergleichsweise geringere Leistungsverluste auf. Wegen der geringeren Stromstärke können Standardkabelstecker verwendet werden, eine Verbindung von Spezialsteckern ist nicht notwendig. Auch dies kann die Herstellkosten des Rangierantriebs weiter senken.

In einer weiteren Ausführungsform weist der elektrische Energiespeicher eine Li-Ion-Batterie (Lithium-Ionen-Batterie) auf. Wegen der hohen spezifischen Kapazität von Li-Ion-Batterien kann in dieser Ausführungsform trotz Verwendung einer Batterie der entsprechenden Leistungsklasse ein geringeres Gesamtgewicht des Rangierantriebs erreicht werden. Wegen der schnellen Lade-und Entladezyklen wird weiterhin die Robustheit und Einsatzbereitschaft des Rangierbetriebs verbessert.

Diese und weitere Merkmale der Erfindung werden nachfolgend anhand von Beispielen unter Zuhilfenahme der begleitenden Figur näher erläutert. Es zeigen:
Fig. 1 : schematisch einen Anhänger mit einem Rangierantrieb, bei dem eine Batterie und eine Steuerung in einer Quer- bzw. Verbindungstraverse des Rangiersystems angeordnet sind,
Fig. 2 : den Anhänger mit Rangierantrieb aus Fig. 1, bei dem jeweils eine Steuerung in einer der Motor-Getriebe-Einheiten angeordnet ist,
Fig. 3 : den Anhänger mit Rangierantrieb aus Fig. 2, bei dem jeweils eine Steuerung und eine Batterie in einer der Motor-Getriebe-Einheiten angeordnet ist,
Fig. 4 : den Anhänger mit Rangierantrieb aus Fig. 3, bei dem ein Ladegerät in der Verbindungstraverse des Rangierantriebs angeordnet ist, und
Fig. 5 : den Anhänger mit Rangierantrieb aus Fig. 4, bei dem das Ladegerät innerhalb des Anhängers angeordnet ist.

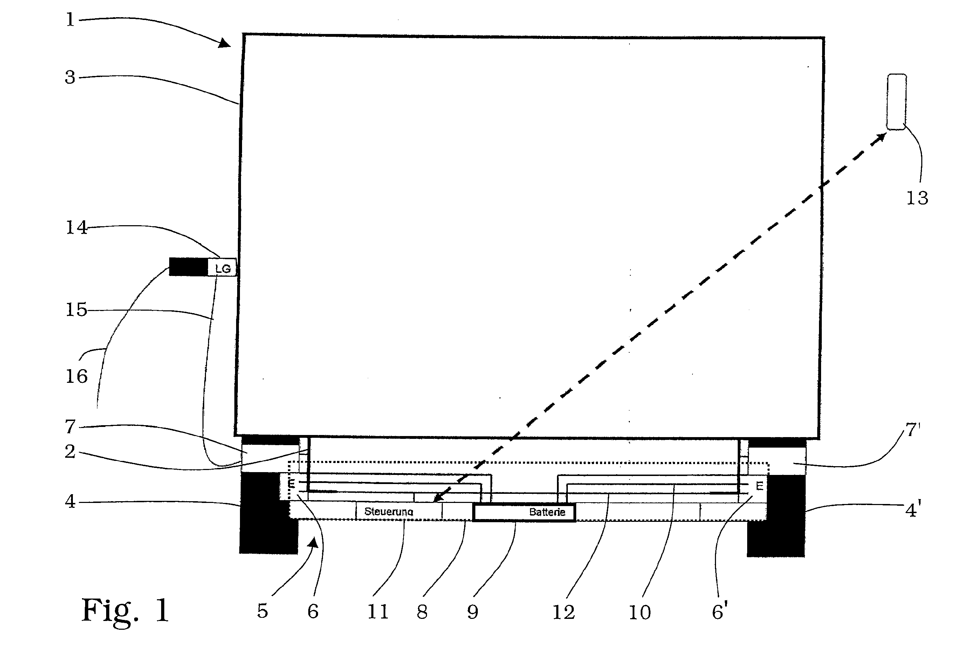

Fig. 1 zeigt einen Anhänger 1 mit einem Grundrahmen 2 (Chassisrahmen), auf dem ein Anhängeraufbau 3 angeordnet ist, und an dem Räder 4 beispielsweise gegenüberliegend an einer gemeinsamen Radachse befestigt sind. Der Anhänger 1 weist einen Rangierantrieb 5 auf, mit dem der Anhänger 1 auch dann bewegbar ist, wenn er von einem Zugfahrzeug abgekoppelt ist.

Der Rangierantrieb 5 weist eine Motor-Getriebe-Einheit 6 auf, in der als Antriebsmotor ein Elektromotor (E) einer geeigneten Leistungsklasse zusammen mit der zur Motorsteuerung benötigten Leistungselektronik angeordnet ist. Weiterhin ist eine Antriebsrolle 7 vorgesehen, die in einer Ruheposition vom Rad 4 entfernt anordenbar und in einer Antriebsposition gegen das Rad 4 gedrückt sein kann. Durch die in der Antriebsposition befindliche Antriebsrolle kann ein Drehmoment des Antriebsmotors auf das Rad übertragen werden und dadurch der Anhänger 1 durch den Rangierantrieb 5 bewegt werden. Dies ist beispielsweise detailliert in EP 1 836 085 A1 und EP 1 714 858 A1 gezeigt.

Um einen beidseitigen Antrieb und damit eine umfassende Manövrierfähigkeit des Anhängers 1 zu gewährleisten, ist in Fig. 1 an einem an derselben Radachse wie das Rad 4 gegenüberliegend angeordneten weiteren Rad 4' eine weitere Motor-Getriebe-Einheit 6' mit einer weiteren Antriebsrolle 7' angeordnet. Die Funktionsweise dieser Komponenten entspricht der der am Rad 4 angeordneten Komponenten 6 und 7 und wird daher nicht gesondert beschrieben.

Um eine geeignete Befestigung des Rangierantriebs 5 am Anhänger 1 zu gewährleisten, kann eine Befestigungsvorrichtung zur Befestigung des Rangierantriebs 5 beispielsweise am Grundrahmen 2 oder an einer Radachse vorgesehen sein. Zur Kopplung des in Fig. 1 dargestellten beidseitigen Rangierantriebs kann die Befestigungsvorrichtung eine Quertraverse 8 aufweisen (gestrichelt dargestellt), die beispielsweise in der Nähe der Radachse und parallel zu dieser montiert sein kann.

Im gezeigten Beispiel weist die Quertraverse 8 einen elektrischen Energiespeicher 9 auf, der wie dargestellt als Batterie, z.B. als 48-Volt-Batterie, ausgeführt sein kann. Wie gezeigt kann der elektrische Energiespeicher 9 innerhalb der Quertraverse angeordnet sein. Beispielsweise kann die Quertraverse 8 ein hohles Stahlrohr aufweisen, in dem der elektrische Energiespeicher angeordnet bzw. eingelassen ist. Bei dieser Anordnung ist der elektrische Energiespeicher in dem Stahlrohr vor Umwelteinflüssen, welche im rauen Farbetrieb an der Radachse herrschen können, geschützt.
Der elektrische Energiespeicher 9 kann über Verbindungskabel 10 mit den zu speisenden Komponenten des Rangierantriebs 5 verbunden sein. Im gezeigten Beispiel ist der elektrische Energiespeicher 9 über die Verbindungskabel 10 mit den in den Motor-Getriebe-Einheiten 6, 6' angeordneten Elektromotoren und der zugehörigen Leistungselektronik verbunden. Die Verbindungskabel 10 und deren Verbindungen zu den zu speisenden Komponenten sind dabei vollständig innerhalb der Quertraverse 8 angeordnet. Beispielsweise können die Verbindungskabel 10 durch das Stahlrohr geführt sein. Hierdurch können Verbindungskabel 10 und deren Verbindungen zu den zu speisenden Komponenten ebenfalls vor schädlichen Umwelteinflüssen geschützt werden.

Durch die Verwendung z.B. einer 48-Volt-Versorgungsspannung können die Kabel vergleichsweise dünn mit einem geringen Querschnitt von beispielsweise 1,5 bis 2,5 mm<2> gewählt werden. Zur Verbindung mit den zu versorgenden Komponenten können Standardsteckverbinder verwendet werden. Dies ermöglicht eine kostengünstige Gestaltung des leistungsfähigen Rangierantriebs bei gleichzeitiger Einsparung von Gewicht.

Weiterhin versorgt der elektrische Energiespeicher 9 in gezeigten Beispiel eine Steuerung 11, welche über eine Kommunikationsverbindung 12 wie beispielsweise einen Datenbus mit den Motor-Getriebe-Einheiten 6, 6' verbunden ist. Die Steuerung 11 ist zudem über eine bidirektionale Funkverbindung (grob gestrichelt dargestellt) mit einer Fernbedienung 13 verbunden, über die ein Bediener Steuerungsinformationen an die Steuerung übermitteln und somit eine Rangiertätigkeit des Rangierantriebs 5 steuern kann. Weiterhin kann die Steuerung auch über die bidirektionale Funkverbindung betriebsrelevante Informationen an den Benutzer senden, beispielsweise Informationen bezüglich eines Ladezustands des elektrischen Energiespeichers 9 oder bezüglich der Ausgangssignale der Antriebsmotoren.

Im gezeigten Beispiel sind der elektrische Energiespeicher 9, die Verbindungskabel 10 und die Kommunikationsverbindung 12 mit den zugehörigen Steckverbindungen vollständig in der Quertraverse 8 enthalten und so vor schädigenden Umwelteinflüssen und Erschütterungen geschützt. Dies ermöglicht eine robuste Gestaltung des Rangierantriebs 5 trotz der rauen Umweltbedingungen am Montageort in der Nähe der Radachse des Anhängers 1.

Zum Laden des elektrischen Energiespeichers 9 ist ein Ladegerät 14 über ein Ladekabel 15 mit dem Rangierantrieb 5 verbunden, über das dem elektrischen Energiespeicher 9 ein Ladestrom zugeführt werden kann. Im gezeigten Beispiel ist das Ladegerät an einer externen Energieeinspeisungsvorrichtung des Anhängers 1, wie beispielsweise einem Verbinder zu einer Landstromsteckdose, angeordnet. Alternativ oder zusätzlich kann der Rangierantrieb 5 bzw. das Ladegerät 14 auch über eine Verkabelung mit einer Deichselsteckdose des Anhängers 1 an eine Energieversorgung eines Zugfahrzeugs angekoppelt werden.

Im Beispiel ist das Ladekabel 15 außerhalb des Anhängers 1 geführt und kann seitlich durch eine am Rangierantrieb beispielsweise beidseitig vorgesehene Steckdose mit der Kabelführung des Rangierantriebs 5 verbunden werden. Wird ein Landstromkabel 16 mit der externen Energieeinspeisungsvorrichtung und/oder dem Ladegerät 14 verbunden, kann der elektrische Energiespeicher 9 geladen werden.

Im gezeigten Beispiel findet der Einbau des Rangierantriebs 5 vollständig außerhalb des Anhängers 1 statt, d.h. außen am Anhänger 1, z.B. durch Befestigung an einem Fahrwerk oder Grundrahmen 2 des Anhängers 1, und ohne Einlassungen in den Anhängeraufbau 3 oder Bohrungen in die Außenhaut des Anhängeraufbaus 3. Eine Verdrahtung in einem Innenraum des Anhängers 1 mit Verlegung von Kabeln im oder am Unterboden und mit entsprechenden Bohrungen ist nicht notwendig. Dies vereinfacht einen Einbau des Rangierantriebs 5 und schont die Struktur des Anhängers 1. Es wird zudem kein Stauraum im Anhänger 1 benötigt. Die Gewichtsverteilung im Anhänger 1 wird durch den im Allgemeinen schweren, da leistungsfähigen Energiespeicher 9 kaum beeinflusst, da dieser sich zentral an der Radachse befindet. Zudem kann ein Li-Ion-Akku mit hoher spezifischer Kapazität und daher geringerem Gewicht bei gleicher Leistungsklasse verwendet werden. Als Verbindungskabel 10 genügen in der gezeigten Anordnung kurze Kabelstücke mit einer Länge von Beispielsweise weniger als 1,20 m, die wegen der hohen Versorgungsspannung nur einen vergleichsweise geringen Querschnitt haben. Hierdurch können Herstellkosten sowie Gesamtgewicht eingespart werden. Leistungsverluste im elektrischen Versorgungssystem werden durch die höhere Versorgungsspannung und die kurzen Kabelstrecken auf ein Minimum reduziert. Aufgrund der höheren Versorgungsspannung und der damit geringeren Ströme können Standardkabelstecker verwendet werden, was zum einen die Herstellkosten und zum anderen die Verdrahtungszeit weiter senkt. Durch die gezeigte Anordnung der Komponenten in der Quertraverse 8 können die Verbindungskabel 10 ebenfalls in der Quertraverse 8 verlegt werden, wodurch eine Beschädigung der Kabel verhindert werden und ein robuster Betrieb des Rangierantriebs 5 sichergestellt werden kann.

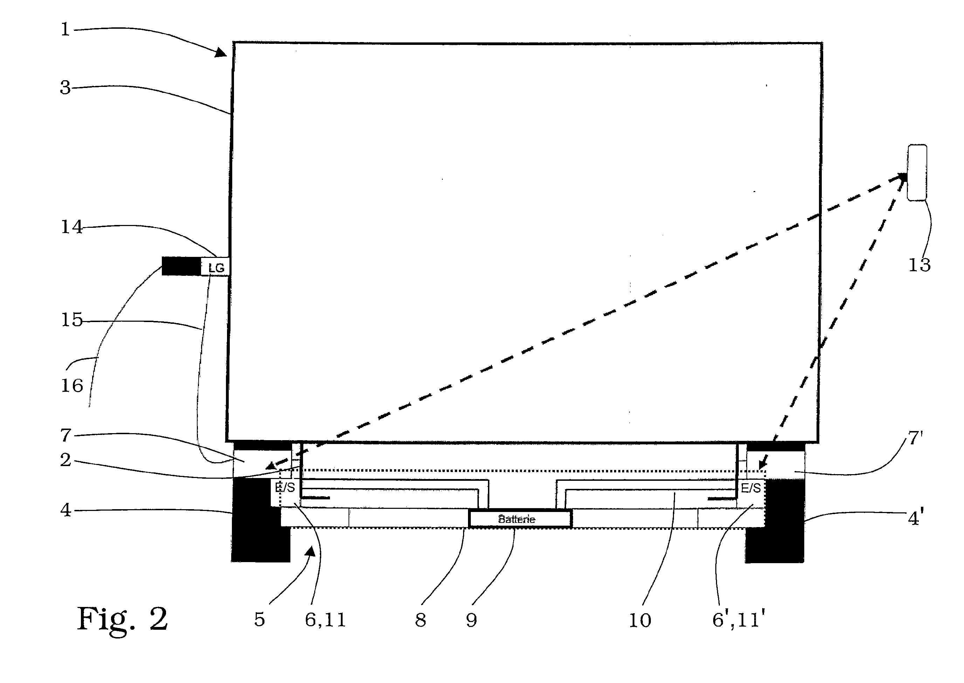

Fig. 2 zeigt einen der Darstellung aus Fig. 1 weitgehend entsprechenden Anhänger 1 mit Rangierantrieb 5, bei dem die Steuerung 11 nicht zentral in der Quertraverse (Verbindungstraverse 8) angeordnet ist, sondern bei dem jeweils eine Steuerung 11, 11' in einer der Motor-Getriebe-Einheiten 6, 6' (E/S) angeordnet ist. Die Steuerungen 11, 11' können beispielsweise direkt mit der Leistungselektronik des Antriebsmotors gekoppelt sein und einen Betrieb der Antriebsmotoren steuern. Im gezeigten Beispiel kommuniziert jede der Steuerungen 11, 11' über eine bidirektionale Funkverbindung (grob gestrichelt dargestellt) mit der Fernbedienung 13, von der beispielsweise Befehle des Bedieners zur Steuerung einer Rangiertätigkeit des Rangierantriebs 5 empfangen werden können. Weiterhin können durch die bidirektionale Funkverbindung auch Steuerungsinformationen von einer der Steuerungen 11, 11' auf die andere der Steuerungen 11', 11 übertragen werden, sodass ein Abgleich des Betriebs der Antriebsmotoren möglich ist. Daher wird im gezeigten Beispiel eine Kommunikationsverbindung 12 innerhalb der Quertraverse nicht benötigt, wodurch die Herstellkosten weiter gesenkt werden können.

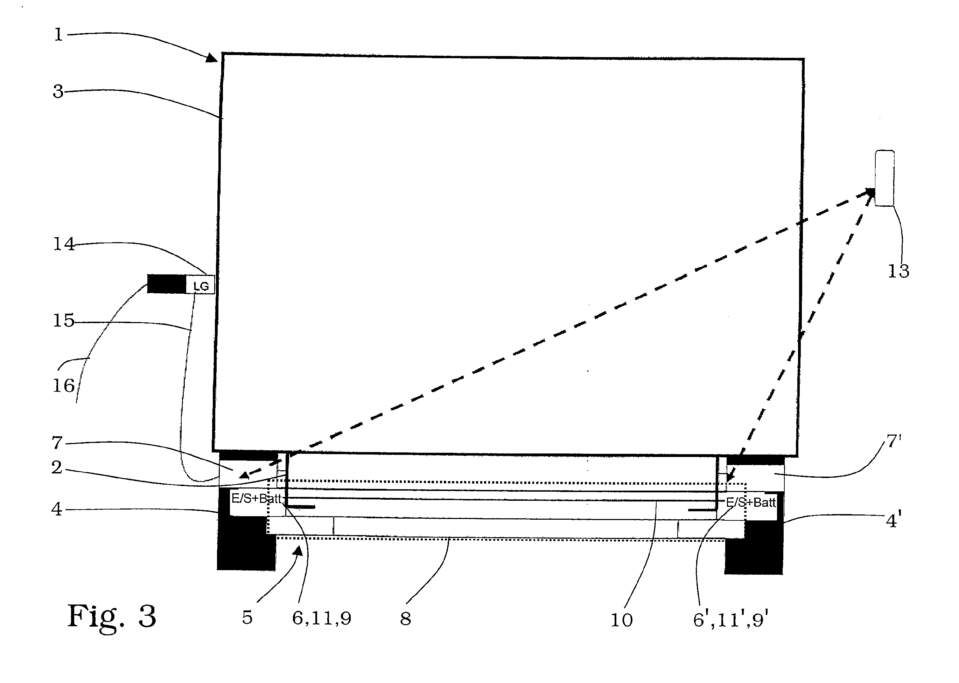

Fig. 3 zeigt einen in weiten Teilen der Darstellung der Fig. 2 entsprechenden Anhänger 1 mit Rangierantrieb 5, bei dem jedoch anstelle des zentral in der Quertraverse 8 angeordneten elektrischen Energiespeichers 9 in jeder der Motor-Getriebe-Einheiten 6, 6' jeweils ein eigener elektrischer Energiespeicher 9, 9' angeordnet ist (E/S + Batt). In dieser Variante können die elektrischen Energiespeicher 9, 9' direkt mit der jeweiligen Steuerung 11, 11', Leistungselektronik und dem jeweiligen Antriebsmotor verbunden sein und diese mit elektrischer Energie versorgen. Hierdurch entfällt die Notwendigkeit der Verlegung von Versorgungskabeln innerhalb der Quertraverse 8, sodass Verkabelungsaufwand und Herstellkosten gesenkt werden können. Als Verbindungskabel 10 innerhalb der Quertraverse 8 wird in dem Beispiel lediglich ein Kabel zur Übertragung von Ladeströmen zu den bzw. zwischen den elektrischen Energiespeichern 9, 9' benötigt, um eine beidseitige Anschlussmöglichkeit des Ladekabels 15 je nach Anordnung des Ladegeräts 14 bzw. einer Landstromsteckdose in der Umgebung des Anhängers 1 zu gewährleisten.

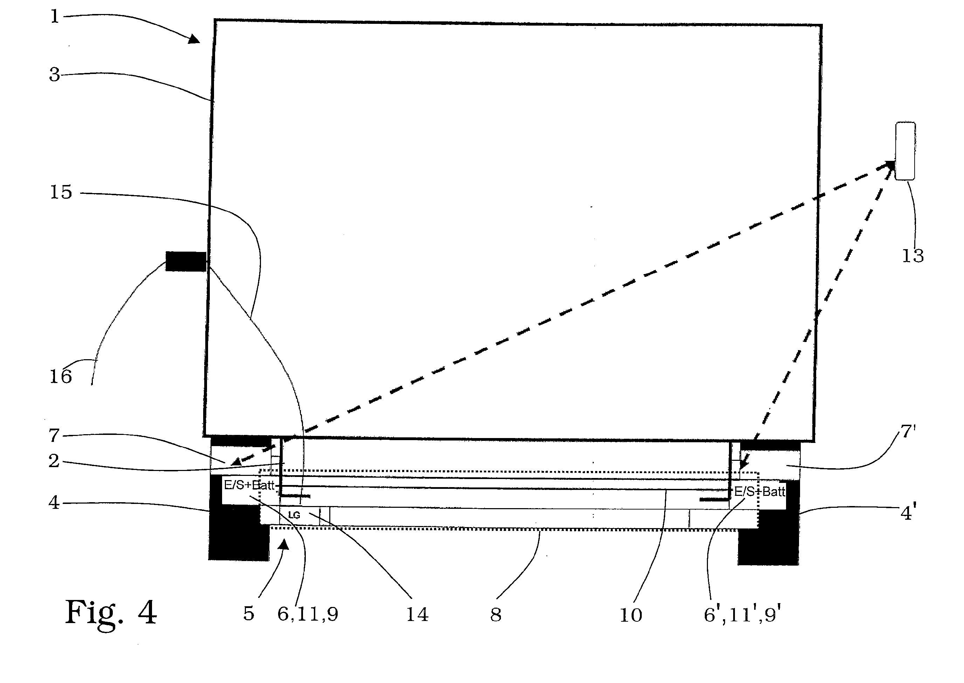

Der in Fig. 4 gezeigte Anhänger 1 mit Rangierantrieb 5 entspricht in weiten Teilen dem in Fig. 3 gezeigten. Hier ist jedoch das Ladegerät 14 in der Befestigungsvorrichtung des Rangierantriebs 5, nämlich in der Quertraverse 8, angeordnet, sodass es dauerhaft mit den in den Motor-Getriebe-Einheiten 6, 6' angeordneten elektrischen Energiespeichern 9, 9' gekoppelt werden kann. In dieser Variante ist zusätzlich eine Kopplung zwischen dem Ladegerät 14 und einer externen Energiequelle beispielsweise am Anhänger 1 vorzusehen, die im Beispiel durch ein innerhalb des Anhängers 1 verlegtes Ladekabel beispielsweise durch eine 230-Volt-Leitung realisiert ist. In dieser Variante kann die Ladung der elektrischen Energiespeicher 9, 9' automatisch erfolgen, wenn die externe Energieeinspeisungsvorrichtung des Anhängers 1 mit einer externen Energiequelle, beispielsweise einer Landstromsteckdose oder einer Energieversorgung des Zugfahrzeugs verbunden ist. Das Laden kann so ohne separaten Eingriff des Bedieners automatisch erfolgen.

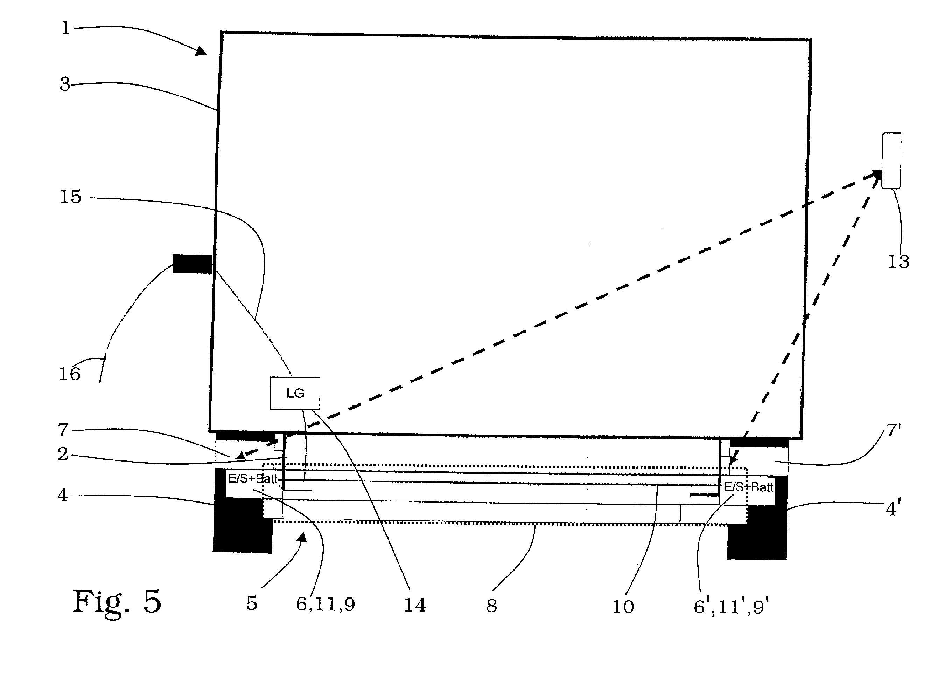

In dem in Fig. 5 gezeigten Anhänger 1 mit Rangierantrieb 5, welcher in weiten Teilen dem in Fig. 4 gezeigten entspricht, ist das Ladegerät 14 innerhalb des Anhängers, d.h. innerhalb des Anhängeraufbaus 3 angeordnet. Das Ladegerät 14 ist in diesem Ausführungsbeispiel mit der externen Energiequelle durch ein innerhalb des Anhängers 1 verlegtes Ladekabel, welches beispielsweise durch eine 230-Volt-Leitung realisiert sein kann, gekoppelt. In dieser Variante kann die Ladung der elektrischen Energiespeicher 9, 9' automatisch erfolgen, wenn die externe Energieeinspeisungsvorrichtung des Anhängers 1 mit einer externen Energiequelle, beispielsweise einer Landstromsteckdose oder einer Energieversorgung des Zugfahrzeugs, verbunden ist. Das Laden kann daher auch in diesem Ausführungsbeispiel ohne separaten Eingriff des Bedieners automatisch erfolgen. Weiterhin ist es in diesem Ausführungsbeispiel möglich, ein in dem Anhänger vorgesehenes Ladegerät beispielsweise gemeinsam mit anderen Komponenten zu nutzen.

## Patentansprüche

1. Rangierantrieb (5) für einen Anhänger (1), mit
- einer Antriebsvorrichtung (6, 6') mit einem Antriebsmotor und einer mit dem Antriebsmotor gekoppelten Übertragungsvorrichtung (7, 7') zum Übertragen eines Drehmoments des Antriebsmotors auf ein Rad (4, 4') des Anhängers (1);
- einer Befestigungsvorrichtung (8) zum Befestigen der Antriebsvorrichtung (6, 6') am Anhänger (1); und
- einem elektrischen Energiespeicher (9) zum Versorgen des Antriebsmotors mit elektrischer Energie; wobei
- der elektrische Energiespeicher (9) außen an dem Anhänger (1) anordenbar und mit der Antriebsvorrichtung (6, 6') koppelbar ist;
- wobei der elektrische Energiespeicher (9) an oder innerhalb der Antriebsvorrichtung (6, 6') angeordnet ist.

2. Rangierantrieb (5) nach Anspruch 1, mit
- einer durch die Befestigungsvorrichtung (8) außerhalb des Anhängers (1) befestigbaren weiteren Antriebsvorrichtung (6') mit einem weiteren Antriebsmotor und einer mit dem weiteren Antriebsmotor gekoppelten weiteren Übertragungsvorrichtung (7') zum Übertragen eines Drehmoments des weiteren Antriebsmotors auf ein weiteres Rad (4') des Anhängers (1); wobei
- die Befestigungsvorrichtung eine Verbindungstraverse (8) zwischen der Antriebsvorrichtung (6) und der weiteren Antriebsvorrichtung (6') aufweist, und
- eine Kopplungsvorrichtung (10, 12) zwischen der Antriebsvorrichtung (6) und der weiteren Antriebsvorrichtung (6') sich innerhalb der Verbindungstraverse (8) erstreckt.

3. Rangierantrieb (5) nach einem der vorstehenden Ansprüche, wobei
- der elektrische Energiespeicher (9) an oder innerhalb der Befestigungsvorrichtung und/oder der Verbindungstraverse (8) angeordnet und durch die Kopplungsvorrichtung (10, 12) mit der Antriebsvorrichtung (6) und/oder der weiteren Antriebsvorrichtung (6') elektrisch gekoppelt ist.

4. Rangierantrieb (5) nach einem der vorstehenden Ansprüche, wobei
- der elektrische Energiespeicher (9) in der Antriebsvorrichtung (6) und ein weiterer elektrischer Energiespeicher (9') in der weiteren Antriebsvorrichtung (6') angeordnet ist, und
- ein Ladestrom zu dem elektrischen Energiespeicher (9) und/oder dem weiteren elektrischen Energiespeicher (9') durch die Kopplungsvorrichtung (10) übertragbar ist.

5. Rangierantrieb (5) nach einem der vorstehenden Ansprüche, mit
- einer durch den elektrischen Energiespeicher (9) mit Energie gespeisten, in der Befestigungsvorrichtung, der Verbindungstraverse (8) und/oder der Antriebsvorrichtung (6) angeordneten Steuerungsvorrichtung (11) zum Ansteuern des Antriebsmotors und/oder des weiteren Antriebsmotors, wobei
- Steuerungsinformationen zwischen der Steuerungsvorrichtung (11), der Antriebsvorrichtung (6) und/oder der weiteren Antriebsvorrichtung (6') durch die Kopplungsvorrichtung (12) übermittelbar sind.

6. Rangierantrieb (5) nach einem der vorstehenden Ansprüche, wobei
- die Steuerungsvorrichtung (11) innerhalb der Antriebsvorrichtung (6) und eine weitere Steuerungsvorrichtung (11') innerhalb der weiteren Antriebsvorrichtung (6') angeordnet ist, und
- Steuerungsinformationen zwischen der Steuerungsvorrichtung (11) und der weiteren Steuerungsvorrichtung (11') durch die Kopplungsvorrichtung (12) und/oder durch eine bidirektionale Funkverbindung zwischen der Steuerungsvorrichtung (11), der weiteren Steuerungsvorrichtung (11') und einer Fernbedienungseinheit (13) übermittelbar sind.

7. Rangierantrieb (5) nach einem der vorstehenden Ansprüche, mit
- einer mit dem elektrischen Energiespeicher (9) und mit einer externen Energieeinspeisungsvorrichtung koppelbaren Ladevorrichtung (14) zum Laden des elektrischen Energiespeichers (9), wobei
- die Ladevorrichtung (14) durch ein außerhalb des Anhängers (1) ansteckbares oder durch ein innerhalb des Anhängers (1) angeordnetes Ladekabel (15) mit dem elektrischen Energiespeicher (9) und/oder mit der externen Energieeinspeisungsvorrichtung verbindbar ist.

8. Rangierantrieb (5) nach einem der vorstehenden Ansprüche, wobei
- die Ladevorrichtung (14) innerhalb der Antriebsvorrichtung (6, 6'), der Befestigungsvorrichtung und/oder der Verbindungstraverse (8) angeordnet ist und durch das Ladekabel (15) mit der externen Energieeinspeisungsvorrichtung verbindbar ist.

9. Rangierantrieb (5) nach einem der vorstehenden Ansprüche, wobei
- die Ladevorrichtung (14) mit der externen Energieeinspeisungsvorrichtung koppelbar und durch das Ladekabel (15) mit dem elektrischen Energiespeicher (9) verbindbar ist.

10. Rangierantrieb (5) nach einem der vorstehenden Ansprüche, wobei
- die Ladevorrichtung innerhalb des Anhängers angeordnet ist.

11. Rangierantrieb (5) nach einem der vorstehenden Ansprüche, wobei
- der externe Energiespeicher (9) durch eine induktive Ladevorrichtung induktiv ladbar ist.

12. Rangierantrieb (5) nach einem der vorstehenden Ansprüche, wobei
- die Kopplungsvorrichtung (10, 12) mit dem elektrischen Energiespeicher (9), der Steuerung (11) und/oder der Ladevorrichtung (14) durch eine innerhalb der Verbindungstraverse (8) angeordnete Steckverbindung koppelbar ist.

13. Rangierantrieb (5) nach einem der vorstehenden Ansprüche, wobei
- der elektrische Energiespeicher (9) und/oder der weitere elektrische Energiespeicher (9') eine Nennspannung größer oder gleich 12 Volt aufweisen.

14. Rangierantrieb (5) nach einem der vorstehenden Ansprüche, wobei
- der elektrische Energiespeicher (9) und/oder der weitere elektrische Energiespeicher (9') eine Li-Ion-Batterie aufweist.
